# EUROPEAN PATENT APPLICATION

(11) **EP 1 306 469 A1**
(43) Date of publication of application: **02.05.2003**
(21) Application number: 01945785.2
(22) Date of filing: 03.07.2001
(51) Int. Cl.: C25D 15/00, C23C 30/00

(54) **STEEL PIPE COATED WITH COMPOSITE MATERIAL AND METHOD FOR PRODUCTION THEREOF**

(30) Priority: 24.07.2000 JP 2000221944; 24.07.2000 JP 2000221945
(71) Applicant: NKK CORPORATION, Tokyo 100-0005 (JP)
(72) Inventor: NISHIO, Hiroaki, Tokyo 100-0005 (JP); NOTO, Takashi, Tokyo 100-0005 (JP); YABUTA, Kazuya, Tokyo 100-0005 (JP)
(74) Representative: HOFFMANN - EITLE
(86) International application number: JP0105745
(87) International publication number: WO02008498

(57) **Abstract**

The present invention relates to a steel pipe covered with composite material coating comprising: a steel pipe; and a coating layer formed on outer surface of the steel pipe; wherein the coating layer comprises an Al matrix, and Al particles covered with a ceramic film such as that of Al₂O₃, MgO, MgO-Al₂O₃, and Mg₃N₂, being dispersed in the Al matrix, or an Al matrix, those Al particles, and ceramic compound particles containing BN, B₄C, C, or the like. The steel pipe with composite material coating has excellent corrosion resistance and heat shock resistance, further has a heat conductive coating layer at outside thereof. Accordingly, the steel pipe with composite material coating is suitable for heat exchangers of waste heat recovery boilers which recover heat from combustion flue gases.

## Description

### TECHNICAL FIELD

The present invention relates to a steel pipe that is used for heat transfer tubes of heat exchangers to recover heat energy from flue gases emitted from incineration of municipal waste, sewage sludge, and industrial waste such as paper making sludge, and from combustion of coal, particularly to a steel pipe of which outer surface being covered with a composite material consisting essentially of inorganic materials, and relates to a method for manufacturing the same.

### BACKGROUND ART

Based on the standpoint of energy saving, there have become practical applications of a heat recovery and utilization system that efficiently recovers waste heat of combusted municipal waste, sewage sludge, and industrial waste such as paper making sludge, and of coal combustion, via a fluid such as steam and air, thus generating electric power. To increase the power generation efficiency, it is preferable to recover high pressure steam at higher temperature from higher temperature combustion flue gas. For example, if steam of 100 atm or higher pressure at 500 °C or higher temperature can be recovered, high power generation efficiency exceeding 30 % is expected.

When, however, various kinds of waste or coal are combusted, the generated flue gas contains gaseous or dusty corrosive materials so that the heat transfer tubes of heat exchangers in waste heat boilers that recover heat from the combustion flue gas are likely corroded, thus, currently, high pressure steam with high temperature cannot be recovered. For instance, incineration of municipal waste generates flue gas containing corrosive materials including chloride gas such as HCl, sulfide gas such as H₂S and SO₂, and salt such as NaCl, KCl, CaCl₂, and Na₂SO₄. Therefore, with the heat transfer tubes made from conventional Cr steels or Ni-Cr steels, normally recovered steam is not higher than 300 °C of temperature thereof. As a result, the power generation efficiency is only around 15 % at the highest.

There is a known method for improving the corrosion resistance of heat transfer tubes: the method is to cover the outer surface of the steel pipe with a metal such as Al, Si, and Cr. According to the method, a metal coating is formed on the outer surface of the steel pipe by diffusion penetration, hot dip plating, spraying, and the like, then the coated metal is reacted with Fe to form an alloy film of Fe-Al, Fe-Si, Fe-Cr, or the like, giving a film thickness of from 0.2 to 1.0 mm. The method is understood to provide excellent adhesion of the film with the mother material of steel pipe, and to form an oxide film during use time, thus improving the corrosion resistance.

JP-A-56-75562, (the term "JP-A" referred herein signifies the "Unexamined Japanese patent publication"), discloses a surface treatment method to reduce the oxidization loss at high temperatures by plating Co or Cr on outer surface of a heat-resistant steel, a pure copper, and the like, followed by diffusing Al into the coating to form an alloy film such as Co-Al or Cr-Al.

JP-A-56-81667 discloses a method to form a Ni-Al alloy film by plating Ni on outer surface of a heat-resistant steel, a pure copper, and the like, followed by diffusing Al into the coating. The method provides an alloy film having most excellent heat resistance at Ni to Al ratio of around 70 : 30.

Even when, however, those kinds of alloy films cover the outer surface of steel pipe, they cannot provide sufficient corrosion resistance under corrosive environments including chloride and sulfide gases and salts described above.

On the other hand, instead of applying alloy film, there is another method to cover the outer surface of steel pipe with a ceramic film having higher resistance to corrosion. Typical ceramics of forming the film include Al₂O₃, SiO₂, Cr₂O₃, ZrO₂, MgAl₂O₄, ZrSiO₄, and CaZrO₃.

As this method, JP-A-10-274401 discloses a method for forming a ceramic film on the outer surface of boiler heat transfer tubes made from a heat-resistant metal using spray, physical vapor deposition, or chemical vapor deposition. It is described in the patent that the ceramics being difficult to become wet with molten salts and giving superior high temperature corrosion resistance improves the corrosion resistance.

Since, however, the thermal expansion coefficient of these ceramics is significantly small compared with that of the mother material, or metal, repeated cycles of heating and cooling induce peeling and cracking on the ceramic film, and the resistance to heat shock is also an issue. Since the phenomenon becomes significant with thicker film, the thickness of the film is normally limited to 0.2 mm or less. With that thin ceramic film, it is difficult to prevent the invasion of corrosive gases and salts into the metal as the mother material, for a long period.

### DISCLOSURE OF THE INVENTION

An object of the present invention is to provide a steel pipe having a coating layer on outer surface thereof, which coating layer gives excellent corrosion resistance and heat shock resistance, and to provide a method for manufacturing thereof.

The above-described object is attained with a steel pipe with composite material coating, which comprises: a steel pipe; and a coating layer formed on outer surface of the steel pipe; wherein the coating layer comprises an Al matrix, and Al particles covered with a ceramic film, being dispersed in the Al matrix.

Alternatively, the object is attained with a steel pipe with composite material coating, which comprises: a steel pipe; and a coating layer formed on outer surface of the steel pipe; wherein the coating layer comprises an Al matrix, Al particles covered with a ceramic film, and ceramic composite particles, both of the particles being dispersed in the Al matrix.

These types of steel pipe with composite material coating are manufactured by, for example, a method which comprises the steps of: placing an Al pipe at outer periphery of a steel pipe, the Al pipe having larger inside diameter than outer diameter of the steel pipe; filling an inorganic material powder between the steel pipe and the Al pipe; and heating the integrated steel pipe, Al pipe, and packed inorganic material powder, in a non-oxidizing gas atmosphere under 1 MPa or below of absolute pressure to a temperature range of from 670 to 1,200 °C.

### BRIEF DESCRIPTION OF THE DRAWINGS

Fig. 1 is a longitudinal cross section of an integrated steel pipe, Al pipe, and packed layer of inorganic material powder, viewed from the axial direction of the steel pipe.
Fig. 2 is a lateral cross sectional view of Fig. 1.
Fig. 3 is a longitudinal cross section of the integrated body of Fig. 1 after heating and cooling, viewed from the axial direction of the steel pipe.
Fig. 4 is a lateral cross sectional view of Fig. 3.
Fig. 5 is a longitudinal cross sectional view of a produced steel pipe with composite material coating, as an example of the present invention.
Fig. 6 is a lateral cross sectional view of Fig. 5.
Fig. 7 is a schematic drawing of structure of the coating layer formed on a steel pipe with composite material coating, as an example of the present invention.
Fig. 8 is a schematic drawing of structure of the coating layer formed on a steel pipe with composite material coating, as another example of the present invention.

### EMBODIMENTS OF THE INVENTION

Since the coating layer formed on outer surface of a steel pipe used as a heat transfer tube of heat exchanger preferably should have superior thermal conductivity, aluminum which has high heat conductivity is preferred to be used as the base thereof. However, Al has a disadvantage of being aggressively attacked by HCl which is a typical corrosive gas. The inventors of the present invention found that the disadvantage can be eliminated by preparing the coating layer with a composite material comprising an Al matrix and Al particles covered with a ceramic film of, for example, Al₂O₃, MgO, MgO-Al₂O₃, and Mg₃N₂, being dispersed therein. A presumable reason is the following.

Aluminum is consumed by HCl, which is a corrosive gas, as Al₂Cl₆ gas. At the same time, Al₂O₃ is generated by oxidizing gases such as O₂, H₂O, and CO₂. Since thus generated Al₂O₃ functions as a protective film against corrosion, the progress of corrosion can be suppressed if the Al₂O₃ prevents the contact between the corrosive gas and aluminum as the matrix. If the coating layer is formed by a composite material comprising an Al matrix and Al particles covered with a ceramic film, being dispersed therein, as in the case of the present invention, the Al₂O₃ protective film is formed to crosslink the dispersed Al particles starting from the origin of the ceramic film, thus preventing the contact between the Al matrix and the corrosive gas.

In that case, if the volumetric percentage of the Al particles covered with the ceramic film to the coating layer is less than 40 vol.%, the distance between particles increases to result in difficulty in forming the perfect Al₂O₃ protective film. If the percentage exceeds 85 vol.%, the amount of Al as the matrix becomes insufficient so that the bonding between Al particles likely becomes insufficient. Therefore, the volumetric percentage of the Al particles to the coating layer is preferred to be a range of from 40 to 85 vol.%.

Since the coating layer according to the present invention has a ductile Al matrix, it shows excellent heat shock resistance. Furthermore, the coating layer contains Al particles covered with ceramic film, being dispersed therein, the coating layer also shows excellent thermal conductivity.

When the coating layer is prepared by a composite material comprising an Al matrix, Al particles covered with a ceramic film made from Al₂O₃, MgO, MgO-Al₂O₃, and Mg₃N₂, and ceramic composite particles containing 60 to 85 wt.% BN, 10 to 30 wt.% B₄C, and 5 to 12 wt.% C, both particles being dispersed in the Al matrix, further excellent corrosion resistance and heat shock resistance can be attained.

If ceramic composite particles consisting mainly of BN, for example, are dispersed in the coating layer, the BN does not react with the Al as the matrix, and is not attacked by corrosive gases such as HCl and by molten salts, further the BN has favorable thermal conductivity and low elastic modulus and thermal expansion coefficient, thus expecting to form a coating layer that has further high corrosion resistance and heat shock resistance. Since, however, commercially available BN powder is ultrafine powder having sizes of 1 µm or less in a fan shape highly crystallized product, it is very difficult for the powder to disperse in the Al matrix. To this point, the inventors of the present invention found that BN can be dispersed in the Al matrix at a high volumetric percentage if only the BN is treated by sintering with a binder such as B₄C and C, followed by pulverizing to form lump, coarse powder, or fine powder.

Better effect is attained if the volumetric percentage of the Al particles covered with ceramic film to the coating layer is limited to a range of from 5 to 75 vol.%, and if the volumetric percentage of the ceramic composite particles to the coating layer is limited to a range of from 5 to 75 vol.%.

If the sum of the amount of BN, B₄C, and C is less than 100 wt.%, the balance of the ceramic composite particles may be one or mixture of the following-given compounds: an oxide such as Al₂O₃, Cr₂O₃, SiO₂, ZrO₂, TiO₂, MgO, 3Al₂O₃-2SiO₂, Al₂O₃-TiO₂, MgO-Al₂O₃, MgO-Cr₂O₃, Zr₂O₃-SiO₂, and 2MgO-SiO₂; a nitride such as TiN, ZrN, and AlN; an oxy-nitride such as AlON and SiAlON; a carbide such as SiC, Cr₃C₂, TiC, and ZrC; a boride such as CrB, TiB₂, and ZrB₂; and a silicate such as MoSi₂ and WSi₂. As of these compounds, AlN which has superior thermal conductivity and corrosion resistance is preferred. Nevertheless, those kinds of balance components should be limited to less than 20 wt.%.

As described above, narrower distance between Al particles covered with ceramic film in the coating layer makes it easier to form the Al₂O₃ protective film. To do this, the size of Al particles is preferably not more than 500 µm, and more preferably 100 µm or less. If the thickness of ceramic film covering the Al particles, consisting of Al₂O₃, MgO, MgO-Al₂O₃, Mg₃N₂, and the like, is less than 0.5 µm, the Cl reaches to internal Al by the solid phase diffusion to degrade the corrosion resistance of the coating layer. And, if the thickness exceeds 10 µm, the thermal conductivity of the coating layer may reduce. Therefore, a preferable range of the thickness of ceramic film is from 0.5 to 10 µm. The ceramic film may be a multilayered structure consisting of, for example, Al₂O₃, MgO, MgO-Al₂O₃, and Mg₃N₂. An example of the multilayered structure is four-layer film of Al₂O₃, MgO, MgO-Al₂O₃, and Mg₃N₂ on the surface of Al particle.

If the thickness of the coating layer is less than 1 mm, it becomes difficult to prevent the invasion of corrosive gases and molten salts into the mother material steel pipe for a long period. If the thickness of the coating layer exceeds 10 mm, the thermal conductivity may degrade. Therefore, the thickness of the coating layer is preferably limited to a range of from 1 to 10 mm.

When a coating layer of Al-base is formed on outer surface of a steel pipe, Al diffuses into the steel pipe to form an Fe-Al-base intermetallic compound, and heating and cooling cycle induces cracks at the intermetallic compound, which may propagate into the coating layer. To prevent the formation of that type of intermetallic compound, it is preferred to form a non-reactive film that does not react with the steel pipe and the coating layer, between the steel pipe and the coating layer.

In particular, it is more preferably to form a non-reactive film including BN that has excellent lubrication property by 20 wt.% or more.

Balance of the film containing 20 wt.% or more BN may be one or mixture of the following-given compounds: Al₂O₃, Cr₂O₃, SiO₂, ZrO₂, TiO₂, MgO, 3Al₂O₃-2SiO₂, Al₂O₃-TiO₂, MgO-Al₂O₃, MgO-Cr₂O₃, Zr₂O₃-SiO₂, 2MgO-SiO₂, SiC, and Si₃N₄. The ceramic materials forming the balance of the film may further include one or more of metals selected from the group consisting of Al, Cu, Fe, Cr, Ni, Mo, Ti, Si, Nb, Co, and Ta, within a range of below 50 wt.%.

If the thickness of the film containing 20 wt.% or more BN is less than 5 µm, the function of the film cannot fully be attained. If the thickness exceeds 200 µm, the material fails to follow expansion and shrinkage of the steel pipe, which may result in the generation of cracks and peeling. Therefore, the thickness of the film is preferably from 5 to 200 µm. In that case, the thickness of the coating layer is preferably from 1 to 10 mm, as described above.

The steel pipe as the mother material may adopt a carbon steel pipe, a Cr steel pipe, and a Cr-Ni steel pipe. In view of heat resistance, preferred ones are Cr steel pipes containing 5 to 30 wt.% Cr, and Cr-Ni steel pipes containing 10 to 30 wt.% Cr and 8 to 35 wt.% Ni. In particular, a Cr-Ni steel pipe of 18 wt.% Cr and 8 wt.% Ni is preferable. These steel pipes may further include Mo, Ti, Si, Al, Nb, Co, Ta, or the like. The present invention does not particularly specify the shape of steel pipe, and is applicable to square pipes and circular pipes.

The effect of the present invention is not damaged even when the coating layer contains the following-listed materials within a range of 20 vol.%: metals such as Mo, Ti, Nb, Co, Ta, and Si; oxides such as Al₂O₃, Cr₂O₃, SiO₂, ZrO₂, TiO₂, MgO, 3Al₂O₃-2SiO₂, Al₂O₃-TiO₂, MgO-Al₂O₃, MgO-Cr₂O₃, Zr₂O₃-SiO₂, and 2MgO-SiO₂; nitrides such as TiN, ZrN, and AlN; oxy-nitrides such as AlON and SiAlON; carbides such as SiC, Cr₃C₂, TiC, and ZrC; borides such as CrB, TiB₂, and ZrB₂; and silicates such as MoSi₂ and WSi₂. If, however, these materials exist over 20 vol.%, the heat shock resistance of the coating layer may be degraded. Particularly the AlN which has superior thermal conductivity and corrosion resistance becomes an origin of formation of the Al₂O₃ protective film, so that AlN is preferably added, rather positively, within a range of 20 vol.%.

A steel pipe with composite material coating, according to the present invention, may be manufactured by the steps of: placing an Al pipe at outer periphery of the steel pipe, the Al pipe having larger inside diameter than outer diameter of the steel pipe; filling an inorganic material powder such as Al particles covered with a ceramic film of Al₂O₃, MgO, MgO-Al₂O₃, Mg₃N₂, and the like, and ceramic composite particles of BN, B₄C, C, and the like, between the steel pipe and the Al pipe; and heating the integrated steel pipe, Al pipe, and packed inorganic material powder, in a non-oxidizing gas atmosphere under 1 MPa or below of absolute pressure to a temperature range of from 670 to 1,200 °C, thus fusing the Al pipe and letting the fused Al penetrate into the packed inorganic material powder layer. The non-oxidizing atmosphere is applied to fuse the Al pipe because an oxidizing atmosphere induces the generation of Al₂O₃ to prevent the penetration of the fused Al. The pressure of the atmosphere gas is selected to 1 MPa or less because the pressures of above 1 MPa hinder the penetration of the fused Al. The heating temperature is necessary at 670 °C or above to fuse the Al pipe. If, however, the temperature exceeds 1,200 °C, the mechanical properties of the steel pipe degrade, so that the temperature is necessary to be limited to a range of from 670 to 1,200 °C.

If, for example, the steel pipe adopts a steel pipe covered with a non-reacting film containing 20 wt.% or more BN, the above-described steel pipe with composite material coating having a non-reactive film between the steel pipe and the coating layer can be obtained.

When N₂ is applied as the non-oxidizing atmosphere gas, the fused Al reacts with N₂, thus letting the AlN particles disperse into the Al matrix. When the outer periphery of the Al pipe is heated to a temperature not to fuse thereof, a film of mixture of Al and AlN can be formed on outer surface of the Al pipe, thus preventing the invasion of corrosive gases.

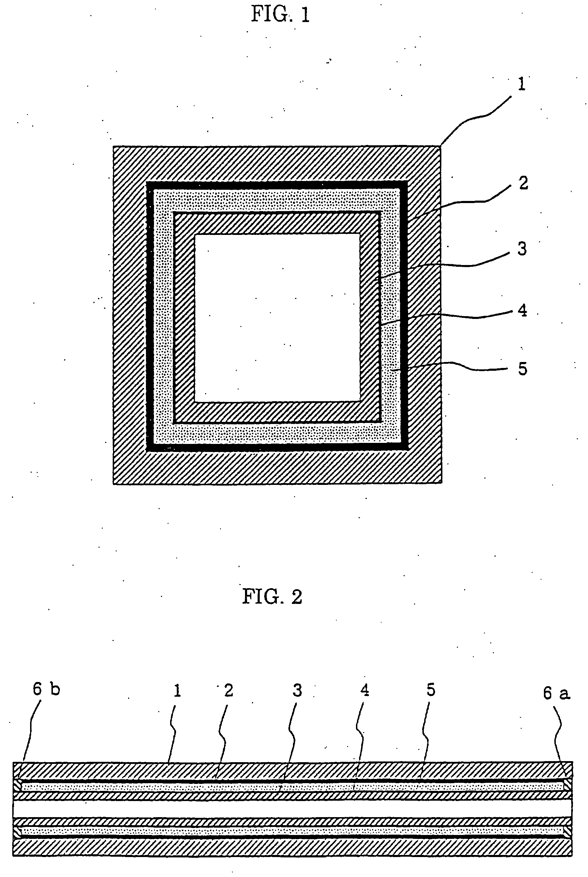

Figs. 1 through 6 show examples of manufacturing method for the steel pipes with composite material coating according to the present invention.

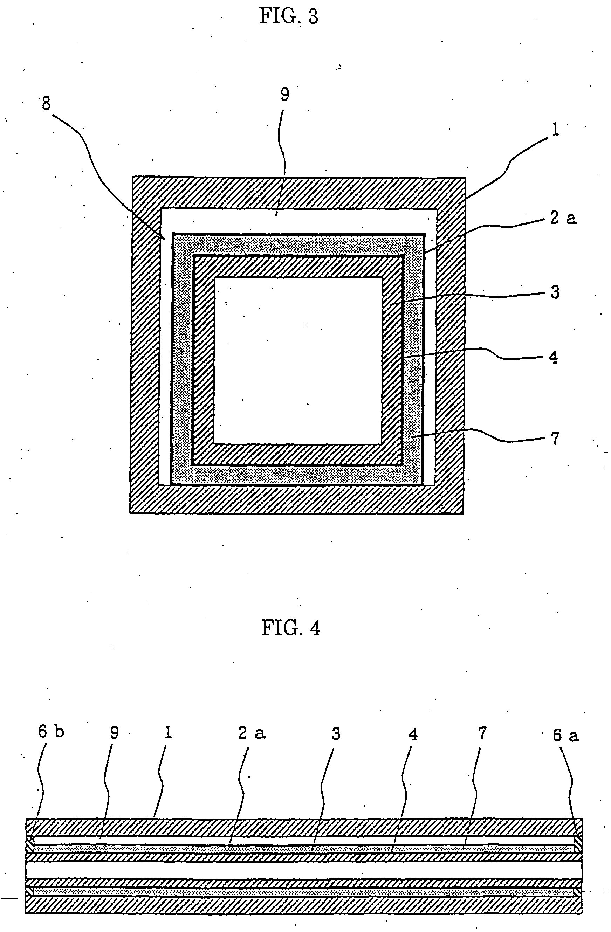

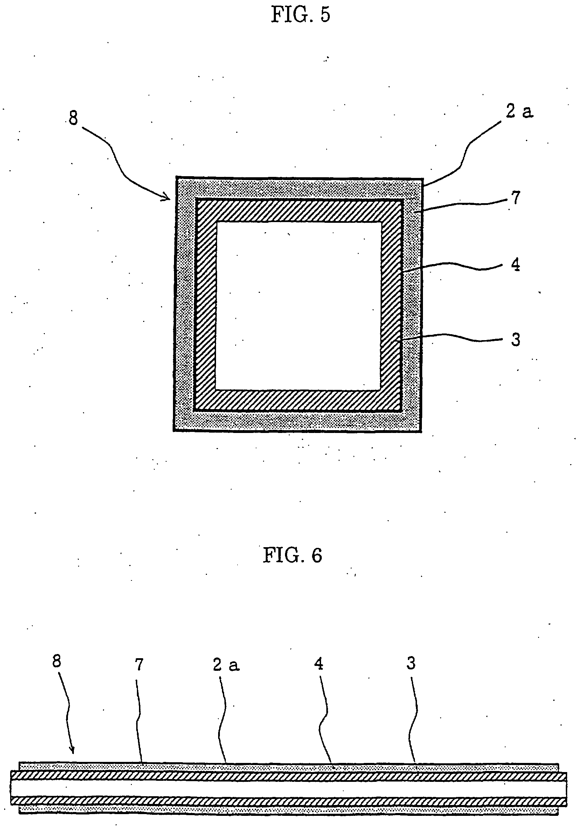

Fig. 1 shows an integrated steel pipe, Al pipe, and filled layer of inorganic material powder, after formed. Fig. 3 shows the integrated body of Fig. 1, after heated in a non-oxidizing atmosphere to fuse the Al pipe, then letting the fused Al penetrate into the inorganic material powder packing layer, and being cooled thereof. Fig. 5 shows a produced steel piped with composite material coating. Figs. 1, 3, and 5 are longitudinal cross sections viewed in the axial direction of the steel pipe. Figs. 2, 4, and 6 are lateral cross sections viewed in vertical direction to the axial direction of the steel pipe.

As seen in Fig. 1. an Al pipe 2 is inserted into a fixed container 1 having an inner shape similar with the outer shape of the Al pipe 2, and a steel pipe 3 covered with a non-reactive film 4 containing 20 wt.% or more BN on outer surface thereof, in advance, is placed in the Al pipe 2. The outer diameter of the steel pipe 3 is smaller than the inside diameter of the Al pipe 2. The Al pipe 2 and the steel pipe 3 are not necessarily arranged coaxially. Next, as seen in Fig. 2, a blanket 6a made of an elastic and porous inorganic material is inserted into an end of the gap between the Al pipe 2 and the steel pipe 3, then the end is closed. An inorganic material powder consisting essentially of Al particles covered with an Al₂O₃ film, for example, is filled from other end of the gap, thus forming an inorganic material powder packing layer 5. Then, the end gap is closed with a blanket 6b similar with that described above. The integrated body is then placed in a heat treatment furnace in a laid down position as shown in Fig. 2, which is then heated in a N₂ atmosphere to fuse the Al pipe 2, thus letting the Al penetrate into the inorganic powder packing layer 5.

In that case, the fused Al penetrates into a void in the inorganic powder packing layer 5. Accordingly, after cooled the integrated body, a steel pipe covered with composite material, 8, having smaller diameter than that of the fixed container 1 is manufactured. Since the space 9 is formed, as shown in Fig. 3 and Fig. 4, the steel pipe 8 can readily be taken out from the fixed container 1. If the heating is applied to a degree that the outer peripheral portion of the Al pipe 2 is not fused, an Al film 2a can be formed on outer surface of the steel pipe covered with composite material, 8.

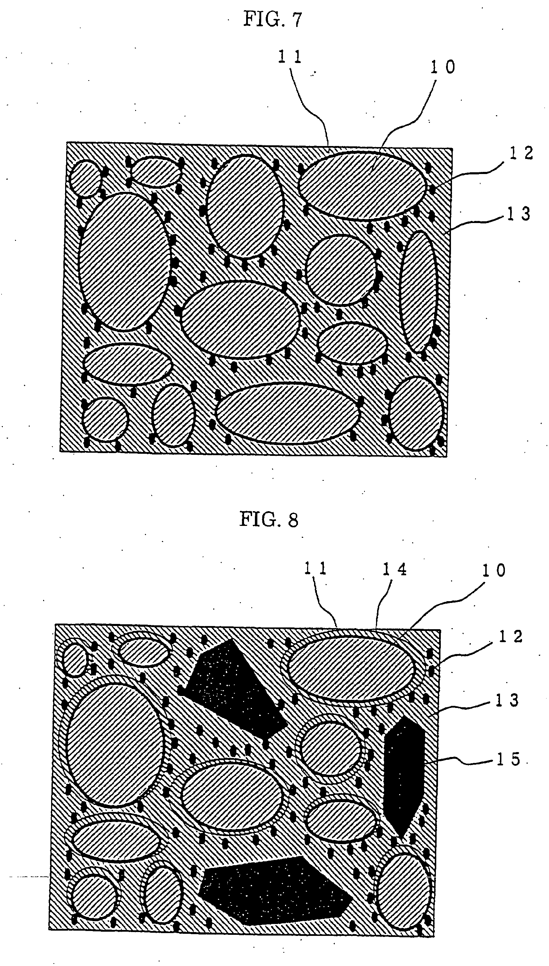

After the steel pipe 8 is taken out from the fixed container 1, as shown in Fig. 5 and Fig. 6, there obtained a steel pipe covered with composite material, comprising a steel pipe 3, a non-reactive film 4 containing BN, and, as shown in Fig. 7, a coating layer 7 consisting essentially of an Al matrix 13, Al particles 10 covered with an Al₂O₃ film 11, and AlN particles 12, both particles being dispersed in the Al matrix 13, and an Al film 2a.

If, to the Al particles covered with Al₂O₃ film, further a ceramic composite powder consisting mainly of BN and metal Mg are added to form an inorganic powder packing layer 5, and if they are heated, then the metal Mg reacts with O₂ existing in a void in the inorganic powder packing layer 5 to precipitate itself selectively on the surface of the Al particles covered with the Al₂O₃ film, thus forming a MgO film. As a result, there obtained a coating layer 7, as shown in Fig. 8, consisting essentially of an Al matrix 13, dispersed Al particles 10 covered with Al₂O₃ film 11 and with MgO film 14, dispersed ceramic composite particles 15 consisting mainly of BN, and dispersed Al particles 12. In that case, to form the MgO film on the surface of the Al particles, it is preferable to limit the amount of metal Mg in the inorganic material powder to a range of from 0.5 to 8 wt.%.

The fixed container 1 is used to prevent the outflow of the fused Al.

If the fixed container 1 reacts with Al, the fixed container itself may degrade and the manufactured steel pipe becomes difficult to take out. Accordingly, the fixed container is fabricated by an oxide such as Al₂O₃, ZrO₂, Al₂O₃-TiO₂, and MgO-Al₂O₃, a nitride such as Si₃N₄ and BN, a carbide such as SiC, or a boride such as CrB, CrB₂, TiB₂, and ZrB₂. Alternatively, graphite may be adopted as inner lining of that type of ceramic film.

### Example 1

On outer surface of a SUS304 steel pipe of JIS nominal size 20A (27.2 mm in outer diameter, 21.6 mm in inner diameter) with 550 mm in length, a BN-base coating agent with a water glass binder was applied and dried, thus forming a non-reactive film consisting mainly of BN-SiO₂ having film thickness of from 10 to 20 µm. The Al pipe applied was a JIS A6063 pipe having 40 mm in outer diameter, 37 mm in inner diameter, and 500 mm in length. The fixed container applied was a graphite tube having 100 mm in outer diameter, 40.2 mm in inner diameter, and 550 mm in length.

These three pipes were arranged in concentric order of from the steel pipe at the innermost position, the Al pipe, and the graphite pipe. A gap at one end of these pipes between the steel pipe and the Al pipe was closed by inserting a mullite inorganic material blanket having sizes of 37 mm in outer diameter, 27.2 mm in inner diameter, and 6 mm in thickness. From the other open end of these pipes between the steel pipe and the Al pipe, 355 g of surface-oxidized Al powder having a composition of 93.5 wt.% Al and 6.5 wt.% Al₂O₃, with 98.4 % of -75 µm of fineness percentage was filled while leaving a 6 mm of edge portion. The opened gap between the steel pipe and the Al pipe was closed by inserting a mullite inorganic material blanket having 37 mm in outer diameter, 27.2 mm in inner diameter, and 6 mm in thickness to close. Then, the integrated body was laid in a heating furnace to maintain the steel pipe axis in horizontal position.

The heating furnace was evacuated, and the atmosphere therein was changed to nitrogen gas atmosphere. The gas pressure was maintained to 0.11 MPa abs., and the temperature of the gas was raised to 800 °C at a heating rate of 10 °C/min, then was held at 800 °C for 7 hours. After that, the power switch was cut off to allow the atmosphere to stand for cooling. After cooled, the manufactured steel pipe with composite material coating was taken out from the graphite fixed container. The inorganic material blankets on both sides of the steel pipe were removed, and the pipe was weighed. A weight increase in the coating layer by 3.80 wt.% was found. The weight increase was caused from the nitriding of Al. The composition of the coating layer was speculated as 86.8 wt.% Al, 9.2 wt.% AlN, and 4.0 wt.% Al₂O₃. Outer diameter was determined to 37.4 mm, which suggested that the bulk density was 2.28 g/cc and the void rate was 18.0 %. After cutting an end of the integrated body by 50 mm, an observation of the cut face was given by EPMA to find that the Al matrix contained dispersed Al particles having sizes of 80 µm or less, covered with an Al₂O₃ film having thickness of from 0.5 to 1 µm, and AlN particles having sizes of 1 µm or less. The volumetric percentage to the coating layer of the Al particles covered with film was 53.0 vol.%, and that of the AlN particles was 7.8 vol.%.

The steel pipe with composite material coating was placed in a tubular furnace to make contact with a corrosive high temperature gas, as described below, to conduct a corrosion resistance test. That is, the heating furnace was heated in ambient atmosphere to raise the temperature of atmosphere outside of the pipe to 700 °C, then air was flown through the inside space of the pipe to make the temperature inside of the pipe to 500 °C. Then, the atmosphere was changed to the one containing 10 % O₂, 20 % H₂O, 1,000 ppm HCl, and balance of N₂. The pipe was exposed to the corrosive atmosphere for 600 hours, followed by standing to cool. After cooled, the steel pipe with composite material coating was taken out from the furnace, and the appearance was observed. Discoloration was found on outer surface of the steel pipe with composite material coating. However, no brittleness and weight change were found, and no gas corrosion occurred.

### Example 2

With a steel pipe, an Al pipe, and a graphite fixed container similar to those used in Example 1, and a procedure similar to that used in Example 1, 360 g of mixed powder consisting of 98 wt.% of surface-oxidized Al powder consisting of 93.5 wt.% Al and 6.5 wt.% Al₂O₃, with 98.4 % of -75 µm of fineness percentage, and 2 wt.% of metallic Mg powder was filled in the gap between the steel pipe and the Al pipe. The integrated body was placed in a heating furnace.

The heating furnace was evacuated, and the atmosphere therein was changed to nitrogen gas atmosphere. The gas pressure was maintained to 0.11 MPa abs., and the temperature of the gas was raised to 700 °C at a heating rate of 10 °C/min, then was held at 700 °C for 7 hours. After that, the power switch was cut off to allow the atmosphere to stand for cooling. After cooled, the manufactured steel pipe with composite material coating was taken out from the graphite fixed container. The inorganic material blankets on both sides of the steel pipe were removed, and the pipe was weighed. A weight increase in the coating layer by 1.6 wt.% was found. The weight increase was caused from the nitriding of Al and the oxidizing of Mg. The composition of the coating layer was speculated as 92.6 wt.% Al, 1.5 wt.% AlN, 3.9 wt.% Al₂O₃, and 2.0 wt.% MgO. Outer diameter was determined to 37.2 mm, which suggested that the bulk density was 2.38 g/cc and the void rate was 12.9 %. After cutting an end of the integrated body by 50 mm, an observation of the cut face was given by EPMA to find that the Al matrix contained dispersed Al particles having sizes of 80 µm or less, covered with an Al₂O₃ film having thickness of from 0.5 to 1 µm, further covered with a MgO film having thickness of 5 µm or less, and AlN particles having sizes of 1 µm or less. The volumetric percentage to the coating layer of the Al particles covered with film was 53.6 vol.%, and that of the AlN particles was 2.0 vol.%.

A corrosion resistance test similar with that applied in Example 1 was given to the steel pipe covered with composite material coating. There was no brittleness and weight change, though discoloration appeared on the outer surface of the steel pipe with composite material coating.

### Example 3

With a steel pipe, an Al pipe, and a graphite fixed container similar to those used in Example 1, and a procedure similar to that used in Example 1, 294 g of mixed powder consisting of 18 wt.% of surface-oxidized Al powder consisting of 93.5 wt.% Al and 6.5 wt.% Al₂O₃, with 98.4 % of -75 µm of fineness percentage, 80 wt.% of ceramic composite powder consisting of 72.3 wt.% BN, 14.6 wt.% B₄C, 8.7 wt.% C, and 4.4 wt.% AlN, and 2 wt.% of metallic Mg powder was filled in the gap between the steel pipe and the Al pipe. The integrated body was placed in a heating furnace.

The heating furnace was evacuated, and the atmosphere therein was changed to nitrogen gas atmosphere. The gas pressure was maintained to 0.11 MPa abs., and the temperature of the gas was raised to 740 °C at a heating rate of 10 °C/min, then was held at 740 °C for 7 hours. After that, the power switch was cut off to allow the atmosphere to stand for cooling. After cooled, the manufactured steel pipe with composite material coating was taken out from the graphite fixed container. The inorganic material blankets on both sides of the steel pipe were removed, and the pipe was weighed. A weight increase in the coating layer by 5.5 wt.% was found. The weight increase was caused from the nitriding of Al and the oxidizing of Mg. The composition of the coating layer was speculated as 28.7 wt.% Al, 29.6 wt.% AlN, 0.6 wt.% Al₂O₃, 1.8 wt.% MgO, 26.5 wt.% BN, 9.6 wt.% B₄C, and 3.2 wt.% C. Outer diameter was determined to 37.2 mm, which suggested that the bulk density was 2.38 g/cc and the void rate was 12.9 %. After cutting an end of the steel pipe by 50 mm, an observation of the cut face was given by EPMA to find that the Al matrix contained dispersed Al particles having sizes of 80 µm or less, covered with an Al₂O₃ film having thickness of from 0. 5 to 1 µm, further covered with a MgO film having thickness of 5 µm or less, ceramic composite particles having sizes of 500 µm or less, and AlN particles having sizes of 1 µm or less. The volumetric percentage to the coating layer of the Al particles covered with film was 8.0 vol.%, that of the ceramic composite particles was 41.5 vol.%, and that of the AlN particles was 20.1 vol.%.

A corrosion resistance test similar with that applied in Example 1 was given to the steel pipe covered with composite material coating. There was no brittleness and weight change, though discoloration appeared on the outer surface of the steel pipe with composite material coating.

### Example 4

With a steel pipe, an Al pipe, and a graphite fixed container similar to those used in Example 1, and a procedure similar to that used in Example 1, 329 g of mixed powder consisting of 78 wt.% of surface-oxidized Al powder consisting of 93.5 wt.% Al and 6.5 wt.% Al₂O₃, with 98.4 % of -75 µm of fineness percentage, 20 wt.% of ceramic composite powder consisting of 72.3 wt.% BN, 14.6 wt.% B₄C, 8.7 wt.% C, and 4.4 wt.% AlN, and 2 wt.% of metallic Mg powder was filled in the gap between the steel pipe and the Al pipe. The integrated body was placed in a heating furnace.

The heating furnace was evacuated, and the atmosphere therein was changed to nitrogen gas atmosphere. The gas pressure was maintained to 0.11 MPa abs., and the temperature of the gas was raised to 740 °C at a heating rate of 10 °C/min, then was held at 740 °C for 7 hours. After that, the power switch was cut off to allow the atmosphere to stand for cooling. After cooled, the manufactured steel pipe with composite material coating was taken out from the graphite fixed container. The inorganic material blankets on both sides of the steel pipe were removed, and the pipe was weighed. A weight increase in the coating layer by 9.5 wt.% was found. The weight increase was caused from the nitriding of Al and the oxidizing of Mg. The composition of the coating layer was speculated as 73.8 wt.% Al, 9.5 wt.% AlN, 3.1 wt.% Al₂O₃, 2.0 wt.% MgO, 7.8 wt.% BN, 2.8 wt.% B₄C, and 0.9 wt.% C. Outer diameter was determined to 37.2 mm, which suggested that the bulk density was 2.38 g/cc and the void rate was 18.1%. After cutting an end of the steel pipe by 50 mm, an observation of the cut face was given by EPMA to find that the Al matrix contained dispersed Al particles having sizes of 80 µm or less, covered with an Al₂O₃ film having thickness of from 0.5 to 1 µm, further covered with a MgO film having thickness of 5 µm or less, ceramic composite particles having sizes of 500 µm or less, and AlN particles having sizes of 1 µm or less. The volumetric percentage to the coating layer of the Al particles covered with film was 30.0 vol.%, that of the ceramic composite particles was 13.9 vol.%, and that of the AlN particles was 8.0 vol.%.

A corrosion resistance test similar with that applied in Example 1 was given to the steel pipe covered with composite material coating. There was no brittleness and weight change, though discoloration appeared on the outer surface of the steel pipe with composite material coating.

### Comparative Example 1

To a SUS304 steel pipe of JIS nominal size 20A (27.2 mm in outer diameter, 21.6 mm in inner diameter) with 700 mm in length, a corrosion resistance test was applied conforming to the procedure of Example 1. Significant mass loss caused from the gas corrosion was found over the whole area of the steel pipe.

### Comparative Example 2

On outer surface of a SUS304 steel pipe of JIS nominal size 20A (27.2 mm in outer diameter, 21.6 mm in inner diameter) with 700 mm in length, a BN-base coating agent with a water glass binder was applied and dried, thus forming a non-reactive film consisting mainly of BN-SiO₂ having film thickness of from 10 to 20 µm. A corrosion resistance test was applied conforming to the procedure of Example 1. Peeling and mass loss caused from gas corrosion were found at many places on the steel pipe tested.

### Comparative Example 3

On outer surface of a SUS304 steel pipe of JIS nominal size 20A (27.2 mm in outer diameter, 21.6 mm in inner diameter) with 700 mm in length, a polycarboxy-silane-base coating agent was applied and dried, for total five cycles, followed by firing in N₂ atmosphere at 800 °C for 1 hour, thus forming a non-reactive film consisting of SiN having film thickness of from 80 to 100 µm. A corrosion resistance test was applied conforming to the procedure of Example 1. Peeling and mass loss were found at many places on the steel pipe tested.

## Claims

1. A steel pipe with composite material coating, comprising: a steel pipe; and a coating layer formed on outer surface of the steel pipe; wherein the coating layer comprises an Al matrix, and Al particles covered with a ceramic film, being dispersed in the Al matrix.

2. The steel pipe with composite material coating of claim 1, wherein the ceramic film consists essentially of at least one compound selected from the group consisting of Al₂O₃, MgO, MgO-Al₂O₃, and Mg₃N₂.

3. The steel pipe with composite material coating of claim 1, wherein the Al particles covered with the ceramic film have volumetric percentages of from 40 to 85 vol.% to the volume of the coating layer.

4. A steel pipe with composite material coating, comprising: a steel pipe; and a coating layer formed on outer surface of the steel pipe; wherein the coating layer comprises an Al matrix, Al particles covered with a ceramic film, and ceramic composite particles, both of the particles being dispersed in the Al matrix.

5. The steel pipe with composite material coating of claim 4, wherein the ceramic film consists essentially of at least one compound selected from the group consisting of Al₂O₃, MgO, MgO-Al₂O₃, and Mg₃N₂.

6. The steel pipe with composite material coating of claim 4, wherein the ceramic composite particle contains 60 to 85 wt.% BN, 10 to 30 wt.% B₄C, and 5 to 12 wt.% C.

7. The steel pipe with composite material coating of claim 4, wherein the Al particles covered with the ceramic film have volumetric percentages of from 5 to 70 vol.% to the volume of the coating layer, and the ceramic composite particles have volumetric percentages of from 5 to 75 vol.% to the volume of the coating layer.

8. The steel pipe with composite material coating of claim 1, wherein the size of the Al particle is 500 µm or less, and the thickness of the ceramic film covering the Al particle is in a range of from 0.5 to 10 µm.

9. The steel pipe with composite material coating of claim 4, wherein the size of the Al particle is 500 µm or less, and the thickness of the ceramic film covering the Al particle is in a range of from 0.5 to 10 µm.

10. The steel pipe with composite material coating of claim 1, wherein the thickness of the coating layer is in a range of from 1 to 10 mm.

11. The steel pipe with composite material coating of claim 4, wherein the thickness of the coating layer is in a range of from 1 to 10 mm.

12. The steel pipe with composite material coating of claim 1, wherein a non-reactive film which does not react with the steel pipe and the coating layer is formed between the steel pipe and the coating layer.

13. The steel pipe with composite material coating of claim 4, wherein a non-reactive film which does not react with the steel pipe and the coating layer is formed between the steel pipe and the coating layer.

14. The steel pipe with composite material coating of claim 12, wherein the non-reactive film contains 20 wt.% or more BN.

15. The steel pipe with composite material coating of claim 13, wherein the non-reactive film contains 20 wt.% or more BN.

16. The steel pipe with composite material coating of claim 12, wherein the thickness of the coating layer is in a range of from 1 to 10 mm, and the thickness of the non-reactive film is in a range of from 5 to 200 µm.

17. The steel pipe with composite material coating of claim 13, wherein the thickness of the coating layer is in a range of from 1 to 10 mm, and the thickness of the non-reactive film is in a range of from 5 to 200 µm.

18. A method for manufacturing steel pipe with composite material coating, comprising the steps of: placing an Al pipe at outer periphery of a steel pipe, the Al pipe having larger inside diameter than outer diameter of the steel pipe; filling an inorganic material powder between the steel pipe and the Al pipe; and heating the integrated steel pipe, Al pipe, and packed inorganic material powder, in a non-oxidizing gas atmosphere under 1 MPa or below of absolute pressure to a temperature range of from 670 to 1,200 °C.

19. The method for manufacturing steel pipe with composite material coating of claim 18, wherein the inorganic material powder contains Al particles.

20. The method for manufacturing steel pipe with composite material coating of claim 18, wherein the inorganic material powder contains Al particles covered with a ceramic film.

21. The method for manufacturing steel pipe with composite material coating of claim 18, wherein the steel pipe is covered with a ceramic film on outer periphery thereof.

22. A heat exchanger using the steel pipe with composite material coating described in claim 1.

23. A heat exchanger using the steel pipe with composite material coating described in claim 4.

## Amended claims

### Amended claims under Art. 19.1 PCT

**1.** A steel pipe with composite material coating, comprising: a steel pipe; and a coating layer formed on outer surface of the steel pipe; wherein the coating layer comprises an Al matrix, and Al particles covered with a ceramic film, being dispersed in the Al matrix.

**2.** The steel pipe with composite material coating of claim 1, wherein the ceramic film consists essentially of at least one compound selected from the group consisting of Al₂O₃, MgO, MgO-Al₂O₃, and Mg₃N₂.

**3.** The steel pipe with composite material coating of claim 1, wherein the Al particles covered with the ceramic film have volumetric percentages of from 40 to 85 vol.% to the volume of the coating layer.

**4.** A steel pipe with composite material coating, comprising: a steel pipe; and a coating layer formed on outer surface of the steel pipe; wherein the coating layer comprises an Al matrix, Al particles covered with a ceramic film, and ceramic composite particles, both of the particles being dispersed in the Al matrix.

**5.** The steel pipe with composite material coating of claim 4, wherein the ceramic film consists essentially of at least one compound selected from the group consisting of Al₂O₃, MgO, MgO-Al₂O₃, and Mg₃N₂.

**6.** The steel pipe with composite material coating of claim 4, wherein the ceramic composite particle contains 60 to 85 wt.% BN, 10 to 30 wt.% B₄C, and 5 to 12 wt.% C.

**7.** The steel pipe with composite material coating of claim 4, wherein the Al particles covered with the ceramic film have volumetric percentages of from 5 to 70 vol.% to the volume of the coating layer, and the ceramic composite particles have volumetric percentages of from 5 to 75 vol.% to the volume of the coating layer.

**8.** The steel pipe with composite material coating of claim 1 or 4, wherein the size of the A1 particle is 500 um or less, and the thickness of the ceramic film covering the Al particle is in a range of from 0.5 to 10 µm.

**9.** The steel pipe with composite material coating of claim 1 or 4, wherein the thickness of the coating layer is in a range of from 1 to 10 mm.

**10.** The steel pipe with composite material coating of claim 1 or 4,wherein a non-reactive film which does not react with the steel pipe and the coating layer is formed between the steel pipe and the coating layer.

**11.** The steel pipe with composite material coating of claim 10, wherein the non-reactive film contains 20 wt.% or more BN.

**12.** The steel pipe with composite material coating of claim 10, wherein the thickness of the coating layer is in a range of from 1 to 10 mm, and the thickness of the non-reactive film is in a range of from 5 to 200 µm.

**13.** A method for manufacturing steel pipe with composite material coating, comprising the steps of: placing an Al pipe at outer periphery of a steel pipe, the Al pipe having larger inside diameter than outer diameter of the steel pipe; filling an inorganic material powder between the steel pipe and the Al pipe; and heating the integrated steel pipe, Al pipe, and packed inorganic material powder, in a non-oxidizing gas atmosphere under 1 MPa or below of absolute pressure to a temperature range of from 670 to 1,200 °C.

**14.** The method for manufacturing steel pipe with composite material coating of claim 13, wherein the inorganic material powder contains Al particles.

**15.** The method for manufacturing steel pipe with composite material coating of claim 13, wherein the inorganic material powder contains Al particles covered with a ceramic film.

**16.** The method for manufacturing steel pipe with composite material coating of claim 13, wherein the steel pipe is covered with a ceramic film on outer periphery thereof.

**17.** A heat exchanger using the steel pipe with composite material coating described in claim 1 or 4.
